# EUROPÄISCHE PATENTSCHRIFT

(11) **EP 3 024 974 B1**
(45) Veröffentlichungstag und Bekanntmachung des Hinweises auf die Patenterteilung: **06.09.2017**
(21) Anmeldenummer: 14744103.4
(22) Anmeldetag: 25.07.2014
(51) Int. Cl.: D21C 1/10, C08H 8/00, D21C 7/00, D21C 7/14, D21C 11/00, D21C 11/04, C08L 97/02, C02F 9/00, D21C 5/02, C12P 7/10, C08B 1/00, C08L 1/02, D21C 3/02, D21C 9/08, D21C 3/22

(54) **VERFAHREN ZUR GEWINNUNG VON CELLULOSE**
METHOD FOR OBTAINING CELLULOSE
PROCÉDÉ DE COLLECTE DE CELLULOSE

(30) Priorität: 25.07.2013 EP 13178083
(43) Veröffentlichungstag der Anmeldung: 01.06.2016
(73) Patentinhaber: Fülling, Rainer, 42855 Remscheid (DE)
(72) Erfinder: SCHLABACH, Heiko, 58553 Halver (DE); FÜLLING, Rainer, 42855 Remscheid (DE)
(74) Vertreter: Leifert & Steffan
(86) Internationale Anmeldenummer: PCT/EP2014/066071
(87) Internationale Veröffentlichungsnummer: WO 2015/011275

(56) Entgegenhaltungen:
- EP-A1- 1 310 461
- JP-A- 2005 046 691
- JP-A- 2006 068 603
- US-A1- 2003 192 831

## Beschreibung

Die vorliegende Erfindung betrifft ein Verfahren zur Gewinnung von Cellulose oder einer Mischung enthaltend wenigstens Cellulose und wenigstens Lignocellulose aus wenigstens einem der Gärung zumindest teilweise zugänglichen Substrat umfassend wenigstens die Schritte (1) bis (3) und gegebenenfalls (4), nämlich eine Überführung des Substrats durch Zugabe wenigstens einer anorganischen Base in eine wässrige Mischung mit einem pH-Wert von ≥ 8,5 (Schritt 1), eine Behandlung der nach Schritt (1) erhaltenen wässrigen Mischung mit Ultraschall (Schritt 2), eine Auftrennung der nach Schritt (2) erhaltenen wässrigen Mischung in eine flüssige wässrige Phase und eine disperse Mischung enthaltend Cellulose oder eine Mischung enthaltend wenigstens Cellulose und wenigstens Lignocellulose (Schritt 3) und gegebenenfalls eine Reinigung der nach Schritt (3) erhaltenen dispersen Mischung enthaltend Cellulose oder der Mischung enthaltend wenigstens Cellulose und wenigstens Lignocellulose (Schritt 4), wobei Schritt (1) und Schritt (2) des Verfahrens jeweils bei einer Temperatur < 100°C durchgeführt werden und wobei die Behandlung mit Ultraschall in Schritt (2) in ein oder mehreren Behandlungsphasen erfolgt, wobei die Dauer einer Behandlungsphase im Bereich von 0,2 bis 60 Sekunden liegt und jede Behandlungsphase bei einer Sonotroden-Frequenz in einem Bereich von 14 bis 22 kHz durchgeführt wird.

Cellulose ist ein kettenförmiges Polysaccharid, das in der Regel mehrere tausend Glucose-Einheiten aufweist, die über β-1,4-glycosidische Bindungen verknüpft sind. Die Ketten sind dabei zu langen, parallel angeordneten Fibrillen mit mikrokristallinem Charakter verdrillt. Es resultiert die bekannte Faserstruktur der Cellulose mit festem Charakter, die einen strukturierten molekularen Aufbau aufweist. Lignocellulose besteht aus einem Gerüst aus Cellulose und gegebenenfalls auch Hemicellulose sowie gegebenenfalls weiteren Polyosen. Das Gerüst weist dabei Lignin auf. Die in der Lignocellulose enthaltenen Lignine und sonstige Polyosen und deren enge physikalische Bindung an die Cellulose verleihen der Faserstruktur einen besonders festen und widerstandsfähigen Charakter.

Cellulose ist ein wichtiger Rohstoff zur Papierherstellung, zur Herstellung von Bekleidungsartikeln und kann zudem als Brennstoff zum Heizen oder als Dämmmaterial genutzt werden. Cellulose dient daneben als ein wichtiger natürlicher Bestandteil von Nahrungsmitteln und Futtermitteln. Zudem dienen viele aus Cellulose erhältliche Derivate als Ausgangsstoffe für industrielle Anwendungen: so wird beispielsweise xanthogenierte Cellulose zur Viskoseherstellung eingesetzt und es werden zum Beispiel Methylcellulose, Celluloseacetat und Cellulosenitrat in der Bauindustrie, Textilindustrie oder in der Chemischen Industrie eingesetzt. Eine Nutzung von Lignocellulose findet beispielsweise in Form von Holzmaterialien als Baustoff oder Brennstoff statt. Cellulose kann ferner mittels Cellulase zu Glucose bzw. Oligomeren der Glucose abgebaut werden. Diese Produkte dienen wiederum zur Herstellung weiterer Substrate wie Ethanol, Buttersäure, Butanol, Aceton, Citronensäure und Itaconsäure.

Cellulose und auch Lignocellulose, insbesondere Cellulose, sind grundsätzlich in der Natur in großen Mengen vorhanden, weshalb ein Bedarf an neuen Verfahren zur Gewinnung, insbesondere zur Isolierung, dieser nachwachsenden Rohstoffe aus Biomasse-enthaltenen Substraten besteht.

Einer Gärung zugängliche Substrate wie beispielsweise Rohschlamm, insbesondere aus Abwasser stammender Rohschlamm sind dem Fachmann bekannt. Bei der Gärung, also beim anaeroben Abbau dieser Substrate durch Mikroorganismen, steht insbesondere die Methan-Gärung im Vordergrund. Bei der Methan-Gärung werden durch verschiedene in Abhängigkeit voneinander lebende Mikroorganismen am Ende der Abbaukette Methan und Kohlendioxid als Hauptendprodukte gebildet. Das entstehende Gasgemisch wird bekanntermaßen auch als Biogas bezeichnet und hat heutzutage eine deutliche industrielle und wirtschaftliche Relevanz, insbesondere im Sektor der Energieerzeugung.

Die genannten Substrate bestehen jedoch nicht nur aus bei der Gärung effizient abbaubarer organischer Materie wie Eiweißen, Fetten und wasserlöslichen Kohlenhydraten. Vielmehr enthalten sie insbesondere auch organische Bestandteile wie Cellulose und Lignocellulose.

Die Gewinnung von Cellulose und/oder Lignocellulose, insbesondere Cellulose, aus solchen Substraten wird jedoch durch die Anwesenheit vieler weiterer organischer Bestandteile in solchen Substraten erschwert: Zu nennen sind hierbei insbesondere weitere wasserunlösliche Polysaccharide, Proteoglykane, Glykoproteine und Glykolipide, die in der Regel auch verschiedene, meist acetylierte Aminozucker enthalten. Solche Bestandteile fallen in den genannten Substraten oft als komplexe Matrix an beziehungsweise sind als schwammartiges, dreidimensionales Netzwerk organisiert, das meist eine gelartige, das heißt amorphe und stark wasserhaltige Struktur aufweist. Die genannten Substanzen selbst sind demnach nur begrenzt wasserlöslich und binden dabei eine große Menge Wasser. Für die Aufrechterhaltung des Netzwerks sind meist intermolekulare Wechselwirkungen wie Wasserstoffbrückenbindungen und Dipol-Dipol- Wechselwirkungen verantwortlich, wobei durch diese Kräfte auch die starke Affinität zum Wasser begründet wird. Innerhalb der genannten Substrate, insbesondere in aus Abwasser stammenden Schlämmen wie Rohschlamm, fallen die genannten Gele, beispielsweise auch als EPS (extrazelluläre polymere Substanzen) bezeichnet, an. Die EPS werden von den meisten Mikroorganismen gebildet und bilden aufgrund ihrer komplexen Struktur eine schützende Matrix für mikrobielle Agglomerate wie Biofilme. Sie vermitteln beispielsweise auch die Adhäsion von Mikroorganismenkulturen an Oberflächen. Insbesondere ihre meist schleimartige, komplexe Gelstruktur hat zur Folge, dass ein Abbau durch die anaerobe Gärung nur schwer erfolgen kann. Es hat sich gezeigt, dass diese Substanzen unter anaeroben Bedingungen einer entsprechenden mikrobiellen Spaltung erst über einen langen Zeitraum zugänglich sind.

Problematisch ist, dass die Anwesenheit dieser nicht oder nur schwer abbaubaren Bestandteile die gezielte Isolierung von Cellulose und/oder Lignocellulose, insbesondere Cellulose, aus solchen der Gärung zugänglichen Substraten wie insbesondere aus Abwasser stammendem Rohschlamm erschwert bzw. verhindert.

Üblicherweise erfolgt bei der Aufarbeitung von Abwasser in Kläranlagen zunächst eine grobe Vorreinigung durch Rechen und/oder Sandfänge. Danach wird das vorgereinigte Abwasser in ein Vorklärbecken überführt. Das Abwasser wird langsam durch dieses Becken geleitet, wobei sich Verunreinigungen absetzen (sedimentieren) oder an die Oberfläche aufschwimmen. Durch die mechanische Abtrennung dieser Verunreinigungen erhält man den so genannten Primärschlamm. Das verbleibende Abwasser wird dann durch aerobe Mikroorganismen weiter gereinigt, wobei die in dem Abwasser nach der mechanischen Reinigung vorhandenen organischen Bestandteile durch die aeroben Mikroorganismen verwertet werden (aerobe Belebungsanlage), sodass schließlich hinreichend gereinigtes Wasser entsteht. Die in der aeroben Belebungsanlage durch die Verwertung der Verunreinigungen ständig wachsende Mikroorganismenpopulation wird regelmäßig abgetrennt (Sekundärschlamm, Überschussschlamm) und meist mit dem Primärschlamm vereinigt.

Der bei der Vereinigung von Primärschlamm und Sekundärschlamm resultierende Schlamm wird üblicherweise als Rohschlamm bezeichnet. Er enthält in der Regel einen vergleichsweise hohen Wassergehalt (98 bis 99,5 Gew.-%, bezogen auf das Gesamtgewicht des Rohschlamms). Der Festkörperanteil setzt sich aus den vorstehend beschriebenen organischen Verbindungen sowie aus dem Sekundärschlamm stammenden Mikroorganismen zusammen und enthält zudem üblicherweise einen Anteil an anorganischen Verbindungen. Der organische Anteil enthält neben stabileren Verbindungen wie beispielsweise Cellulose und/oder Lignocellulose auch leicht faulende organische Materie wie wasserlösliche Polysaccharide, Eiweiße und Fette. Bei dieser Faulung entstehen beispielsweise niedermolekulare Fettsäuren, Ammoniak oder Schwefelwasserstoff.

Der Rohschlamm wird in einem nächsten Schritt üblicherweise in Faultürmen einer kontrollierten anaeroben Faulung beziehungsweise Gärung unterworfen. Dabei werden die leicht faulenden Verbindungen durch anaerobe Bakterienkulturen stufenweise zersetzt. Mittels einer ersten Phase, der so genannten Hydrolyse- und Versäuerungsphase, werden die Stoffe durch entsprechende Mikroorganismen hauptsächlich zu niedrigen Fettsäure beziehungsweise Carbonsäuren und Alkoholen sowie Wasserstoff und Kohlendioxid umgesetzt. Über die acetogene Phase entsteht letztlich Essigsäure, die dann in der zweiten Stufe, der Methanphase, durch entsprechende Mikroorganismen (Methanbakterien) zu Methan und Kohlendioxid umgesetzt wird. Zudem wird die Umsetzung von Wasserstoff und Kohlendioxid zu Methan und Wasser bewirkt. Neben dem Hauptprodukt Methan, das gezielt abgeführt wird und dann als Biogas-Komponente oder zur generellen Energieerzeugung (Netzeinspeisung) verwendet wird, entstehen im Faulturm beispielsweise auch stickstoffbasierte Verbindungen wie insbesondere Ammoniak beziehungsweise entsprechende Ammoniumsalze. Der nach dem etwa 20- bis 30-tägigen Faulprozess verbleibende so genannte Faulschlamm (stabilisierter Klärschlamm) enthält neben anorganischen Verbindungen, beispielsweise die genannten anorganischen Ammoniumsalze, auch die genannten stabileren organischen Verbindungen, insbesondere Cellulose und Lignocellulose, die im Faulturm nicht oder nur zu einem geringen Anteil umgesetzt bzw. abgebaut werden. Häufig werden auch größere Feststoffpartikel und Agglomerate, die in dem ursprünglichen Rohschlamm vorhanden sind, nur unvollständig zersetzt, obwohl sie die anaerob zersetzbaren Stoffe enthalten. Grund hierfür ist, dass die Angriffsfläche für die anaerobe Umsetzung in solchen Agglomeraten entsprechend klein ist.

Verfahren zur Abwasserbehandlung sind beispielsweise aus EP 1 310 461 A1, EP 0 960 860 A1, US 2003/192831 A1, JP 2005-046691 A und dem US-Patent 4,370,235 bekannt.

Eine ausreichende gezielte Abtrennung von Cellulose und/oder Lignocellulose, insbesondere Cellulose, aus dem Rohschlamm durch mechanische Verfahren wie Sedimentation, Sieben, Filtration oder Zentrifugation, gelingt mit den herkömmlichen Verfahren jedoch nicht. Der Rohschlamm besitzt ausgesprochen schlechte Sedimentations- und Entwässerungseigenschaften und kann auch durch andere Verfahren nicht zufriedenstellend aufgetrennt werden. Insbesondere kann eine ausreichende gezielte Abtrennung von Cellulose und/oder Lignocellulose, insbesondere Cellulose, aus dem Rohschlamm durch übliche Desintegrationsverfahren nicht in ausreichendem Maße erreicht werden, da die Rohschlämme auch nach der Desintegration noch in hochviskoser, zähflüssiger Form vorliegen, wobei durch die darin enthaltenen Fasern und gelartigen Anteile ein filzigartiger, stark konglomerierter Charakter des Rohschlamms resultiert, der dazu führt, dass die Schlämme einer anschließenden mechanischen Trennung, wenn überhaupt, nur sehr schwer zugänglich sind. Zwar wird durch die Desintegration eine leichte Verbesserung erreicht, jedoch ist diese üblicherweise nicht ausreichend. Selbiges gilt für die weiteren, dem Fachmann bekannten Substrate, die zur Methan-Gärung eingesetzt werden und ebenfalls die genannten faserigen und gelartigen Bestandteile aufweisen. Auch bei solchen der Gärung zugänglichen Substraten, beispielsweise Gras und Mais beziehungsweise Gras- und Maissilage, Gülle oder Bioabfällen wäre es von enormem Vorteil, wenn durch eine vorteilhafte und ökonomische Form der Aufbereitung erreicht wird, dass die darin vorhandenen verwertbaren Verbindungen Cellulose und/oder Lignocellulose isoliert werden könnten.

Es besteht daher ein Bedarf an einem verbesserten Verfahren, welches die gezielte Abtrennung, insbesondere Isolierung von Cellulose und/oder Lignocellulose, insbesondere Cellulose, aus solchen der Gärung zumindest teilweise zugänglichen Substraten wie insbesondere aus Abwasser stammendem Rohschlamm ermöglicht.

Eine Aufgabe der vorliegenden Erfindung ist es daher, ein Verfahren zur Gewinnung von Cellulose und/oder Lignocellulose aus wenigstens einem der Gärung zumindest teilweise zugänglichen Substrat wie insbesondere aus Abwasser stammendem Rohschlamm, zur Verfügung zu stellen, insbesondere ein solches Verfahren, welches gegenüber den aus dem Stand der Technik bekannten üblichen Verfahren Vorteile aufweist. Insbesondere ist es eine Aufgabe der vorliegenden Erfindung, ein solches Verfahren zur Verfügung zu stellen, welches es ermöglicht, Cellulose und/oder Lignocellulose, insbesondere Cellulose, aus solchen der Gärung zumindest teilweise zugänglichen Substrat wie insbesondere aus Abwasser stammendem Rohschlamm abzutrennen und gleichzeitig die weitere Aufarbeitung des verbleibenden Rohschlamms, insbesondere den Faulprozess, effizienter zu gestalten, insbesondere unter ökonomischen und/oder ökologischen Gesichtspunkten.

Diese Aufgabe wird gelöst durch den in den Patentansprüchen beanspruchten Gegenstand und den in der vorliegenden Beschreibung nachstehend offenbarten bevorzugten Ausführungsformen dieses Gegenstands.

Ein Gegenstand der vorliegenden Erfindung ist daher ein Verfahren zur Gewinnung von Cellulose oder einer Mischung enthaltend wenigstens Cellulose und wenigstens Lignocellulose aus wenigstens einem der Gärung zumindest teilweise zugänglichen Substrat umfassend wenigstens die Schritte (1) bis (3) und gegebenenfalls (4), nämlich
(1) Überführung des Substrats durch Zugabe wenigstens einer anorganischen Base in eine wässrige Mischung mit einem pH-Wert von ≥ 8,5,
(2) Behandlung der nach Schritt (1) erhaltenen wässrigen Mischung mit Ultraschall,
(3) Auftrennung der nach Schritt (2) erhaltenen wässrigen Mischung in eine flüssige wässrige Phase und eine disperse Mischung enthaltend Cellulose oder enthaltend eine Mischung enthaltend wenigstens Cellulose und wenigstens Lignocellulose und
(4) gegebenenfalls Reinigung der nach Schritt (3) erhaltenen dispersen Mischung enthaltend Cellulose oder eine Mischung enthaltend wenigstens Cellulose und wenigstens Lignocellulose,
wobei Schritt (1) und Schritt (2) des Verfahrens jeweils bei einer Temperatur < 100°C durchgeführt werden,

und wobei die Behandlung mit Ultraschall in Schritt (2) in ein oder mehreren Behandlungsphasen erfolgt, wobei die Dauer einer Behandlungsphase im Bereich von 0,2 bis 60 Sekunden liegt und jede Behandlungsphase bei einer Sonotroden-Frequenz in einem Bereich von 14 bis 22 kHz durchgeführt wird.

Es wurde überraschend gefunden, dass es das erfindungsgemäße Verfahren ermöglicht, Cellulose oder eine Mischung enthaltend wenigstens Cellulose und wenigstens Lignocellulose aus wenigstens einem der Gärung zumindest teilweise zugänglichen Substrat wie insbesondere aus Rohschlamm, zu gewinnen und diese Verbindungen somit für eine Vielzahl von Industriezweigen und für eine Vielzahl von Anwendungen nutzbar zu machen.

Insbesondere wurde dabei überraschend gefunden, dass es das erfindungsgemäße Verfahren ermöglicht, Cellulose oder eine Mischung enthaltend wenigstens Cellulose und wenigstens Lignocellulose, insbesondere Cellulose, in hohen Ausbeuten, beispielsweise von bis zu 60 Gew.-%, bezogen auf den gesamten Festkörpergehalt des eingesetzten der Gärung zumindest teilweise zugänglichen Substrats, und/oder hohen Reinheitsgraden, beispielsweise in einer Reinheit im Bereich von 75 bis 95 Gew.-%, zu gewinnen. Aus der so erhaltenen Cellulose können insbesondere mittels Cellulase Glucose bzw. Oligomere der Glucose gewonnen werden, welche wiederum - insbesondere durch Mikroorganismen - zur Herstellung weiterer Substrate wie Ethanol, Buttersäure, Butanol, Aceton, Citronensäure und Itaconsäure eingesetzt werden können. Hierbei wurde überraschend gefunden, dass die durch das erfindungsgemäße Verfahren hergestellte Cellulose eine höhere Keimfreiheit aufweist als durch übliche Verfahren gewonnene Cellulose und sich daher die aus mittels des erfindungsgemäßen Verfahrens hergestellter Cellulose gewonnene Glucose besonders für eine durch Mikroorganismen ermöglichte Weiterverarbeitung zu den vorstehend genannten Produkten eignet.

Zudem wurde überraschend gefunden, dass es das erfindungsgemäße Verfahren ermöglicht, der Gärung zumindest teilweise zugängliche eingesetzte Substrate wie beispielsweise Rohschlamm ohne eine energieaufwendige Verarbeitung wie beispielsweise einer Verarbeitung unter verminderten Druck und/oder bei hohen Temperaturen, insbesondere bei Temperaturen >100°C, in einen Zustand zu überführen, der es ermöglicht, Cellulose oder eine Mischung enthaltend wenigstens Cellulose und wenigstens Lignocellulose aus diesem Substrat, insbesondere Rohschlamm, zu erhalten und zu isolieren.

Insbesondere überraschend hat sich gezeigt, dass die Lösung der der vorliegenden Erfindung zugrundeliegenden Aufgabe durch die Kombination der Verfahrensparameter der Schritte (1) und (2), insbesondere durch die Verfahrensparameter der Ultraschallbehandlung gemäß Schritt (2), des erfindungsgemäßen Verfahrens erreicht werden kann, da dadurch die so nach Schritt (2) erhaltene wässrige Mischung in einem Zustand vorliegt, der eine einfache, schnell durchführbare und effektive mechanische Separation von Cellulose oder eine Mischung enthaltend wenigstens Cellulose und wenigstens Lignocellulose ermöglicht, beispielsweise durch Sieben, Filtrieren und/oder Zentrifugation. Insbesondere liegt die wässrige Mischung nicht - wie beispielsweise nach ausschließlicher Ultraschallbehandlung, d.h. ohne Durchführung von Schritt (1) oder nach Durchführung von lediglich Schritt (1) ohne Ultraschallbehandlung - in hochviskoser, zähflüssiger, d.h. gelartiger Form vor, welche dazu führt, dass die darin erhaltenen Verbindungen einer mechanischen Separation, wenn überhaupt, nur schwer zugänglich sind. Im Gegenteil liegt die Mischung nach Schritt (2) des erfindungsgemäßen Verfahrens vorzugsweise als wässrige Mischung vor, die eine flüssige Phase und zudem davon klar unterscheidbare und trennbare feste Bestandteile umfasst. Insbesondere wurde in diesem Zusammenhang überraschend gefunden, dass die insbesondere für eine gelartige Form verantwortlichen Verbindungen wie beispielsweise wasserunlösliche Polysaccharide, Proteoglykane, Glykoproteine und Glykolipide effizient, insbesondere aufgrund der Ultraschallbehandlung gemäß Schritt (2) des erfindungsgemäßen Verfahrens, von der zu gewinnenden Cellulose bzw. der zu gewinnenden Mischung enthaltend wenigstens Cellulose und wenigstens Lignocellulose abgetrennt werden können.

Es wurde ferner überraschend gefunden, dass dabei gleichzeitig die weitere Aufarbeitung des verbleibenden Rohschlamms, insbesondere der Faulprozess, effizienter gestaltet werden kann, insbesondere unter ökonomischen und/oder ökologischen Gesichtspunkten, da Cellulose oder eine Mischung enthaltend wenigstens Cellulose und wenigstens Lignocellulose vor Einsatz des Rohschlamms im Faulprozess daraus schon abgetrennt werden. Die nach der Abtrennung von Cellulose oder einer Mischung enthaltend wenigstens Cellulose und wenigstens Lignocellulose abgetrennte Zusammensetzung enthält einen im Vergleich zu dem eingesetzten der Gärung zumindest teilweise zugänglichen Substrat deutlich erhöhten Anteil an Verbindungen, insbesondere gelösten organischen Verbindungen, die effektiv anaerob umgesetzt werden können. Dies kann beispielsweise durch Bestimmung des CSB-Werts, d.h. des chemischen Sauerstoffbedarfs der abgetrennten Zusammensetzung quantifiziert werden. Die Gärung, beispielsweise die Faulung im Faulturm, wird somit effektiver gestaltet, was neben einer Verkürzung des Faulprozesses zu einer Erhöhung der Menge des beim Prozess erhältlichen Ressourcenmaterials führt, in diesem Fall insbesondere Methan. Auch eine mögliche Verschlammung von Mikroorganismen in beispielsweise Festbettreaktoren wird dadurch erst ermöglicht.

Das erfindungsgemäße Verfahren ist ein zur Gewinnung von Cellulose oder einer Mischung enthaltend wenigstens Cellulose und wenigstens Lignocellulose aus wenigstens einem der Gärung zumindest teilweise zugänglichen Substrat. Vorzugsweise ist das erfindungsgemäße Verfahren ein Verfahren zur Gewinnung von Cellulose aus wenigstens einem der Gärung zumindest teilweise zugänglichen Substrat.

### Substrate

Als der Gärung zumindest teilweise zugängliche Substrate können letztlich alle dem Fachmann im Zusammenhang mit der Gärung, insbesondere der Methan-Gärung, und der damit verbundenen Biogasproduktion bekannten Substrate eingesetzt werden. Hierzu gehören letztlich alle Substrate, die faulbare beziehungsweise gärbare organische Verbindungen enthalten. Als Gärung wird bekanntermaßen der anaerobe Abbau von organischen Verbindungen durch Mikroorganismen bezeichnet, das heißt also die Zersetzung von komplexeren, gegebenenfalls polymeren organischen Verbindungen wie Polysacchariden, Fetten und Eiweißen in niedermolekulare Verbindungen wie insbesondere Methan, Kohlendioxid und Wasser sowie auch Ammoniak und Schwefelwasserstoff. Besonders bevorzugt eingesetzt werden faserhaltige Materialien. Zu solchen Substraten gehören beispielsweise Gras und Mais sowie Gras- und Maissilage, Dünnschlempe, Futterrüben, Ganzpflanzsilagen, Grünschnitt, halmgutartige Biomasse, Industrieobst, Jauche, Presskuchen, Rapsextraktionsschrot, Rapskuchen, Rübenblattsilage, Zuckerrüben, Gülle, Bioabfälle und Rohschlamm aus Abwasser. Das wenigstens eine der Gärung zumindest teilweise zugängliche und im erfindungsgemäßen Verfahren eingesetzte Substrat enthält Cellulose oder eine Mischung enthaltend wenigstens Cellulose und wenigstens Lignocellulose zumindest in gewissen, daraus abtrennbaren Mengen, besonders bevorzugt in einem Anteil von bis zu 70 Gew.-%, beispielsweise in einem Anteil von 20 bis 60 Gew.-%, bezogen auf den gesamten Festkörpergehalt des eingesetzten Substrats.

Bestimmungsmethoden zur Bestimmung des Festkörpergehalts sind dem Fachmann bekannt. Vorzugsweise wird der Festkörpergehalt gemäß EN 12880 (S2A) über die Ermittlung des Trockenrückstands bestimmt.

Vorzugsweise ist das wenigstens eine der Gärung zumindest teilweise zugängliche Substrat daher ausgewählt aus der Gruppe bestehend aus Gras, Mais, Grassilage, Maissilage, Dünnschlempe, Futterrüben, Ganzpflanzsilagen, Grünschnitt, halmgutartige Biomasse, Industrieobst, Jauche, Presskuchen, Rapsextraktionsschrot, Rapskuchen, Rübenblattsilage, Zuckerrüben, Gülle, Bioabfälle und aus Abwasser stammender Rohschlamm, insbesondere Primärschlamm, Sekundärschlamm und/oder Faulschlamm, sowie Mischungen davon. Insbesondere bevorzugt wird im Rahmen des erfindungsgemäßen Verfahrens als wenigstens ein der Gärung zumindest teilweise zugängliches Substrat Rohschlamm aus Abwasser eingesetzt.

Vorzugsweise liegt das wenigstens eine der Gärung zumindest teilweise zugängliche Substrat in Form einer wässrigen Mischung vor.

Vorzugsweise ist das wenigstens eine der Gärung zumindest teilweise zugängliche Substrat ein der Gärung zugängliches Substrat.

Vorzugsweise erfolgen die Schritte (1), (2), (3) und gegebenenfalls (4) des erfindungsgemäßen Verfahrens in genau dieser Reihenfolge nacheinander.

### Schritt (1)

Bei Schritt (1) des erfindungsgemäßen Verfahrens handelt es sich um eine Überführung des der Gärung zumindest teilweise zugänglichen Substrats in eine wässrige Mischung mit einem pH-Wert von ≥ 8,5, welche durch Zugabe wenigstens einer anorganischen Base erzielt wird, mit der der pH-Wert eingestellt wird.

Vorzugsweise weist die wässrige Mischung nach der Zugabe der anorganischen Base einen pH-Wert im Bereich von ≥ 8,5 bis 13, besonders bevorzugt im Bereich von 9,0 bis 13 oder von 9,0 bis 12,5, ganz besonders bevorzugt im Bereich von 9,5 bis 12 auf.

Vorzugsweise wird in Schritt (1) des erfindungsgemäßen Verfahrens als wenigstens eine anorganische Base eine Base ausgewählt aus der Gruppe bestehend aus NaOH, KOH, Na₂CO₃, K₂CO₃, CaO, Ca(OH)₂ und MgO sowie Mischungen davon eingesetzt. Auch der Einsatz von Produkten wie Holzasche, die reich an wenigstens einer der vorstehend genannten Basen sind, können eingesetzt werden. Bevorzugt werden NaOH und/oder KOH, ganz besonders bevorzugt wird NaOH eingesetzt.

Nach der Zugabe der mindestens einen anorganischen Base liegt eine wässrige alkalisierte Mischung vor. Die Basen können dem Substrat direkt, das heißt insbesondere als Feststoff, zugefügt werden. Dies kann beispielsweise dann geschehen, wenn das Substrat selbst einen ausreichend hohen Wassergehalt aufweist, beispielsweise im Falle von Rohschlamm aus Abwasser. Möglich ist auch, dass zunächst wässrige basische Lösungen oder Dispersionen, vorzugsweise Lösungen der Basen hergestellt werden, die dann dem Substrat zugefügt werden. Dies ist beispielsweise dann bevorzugt, wenn es sich bei dem Substrat um einen Feststoff oder eine hochfeststoffhaltige Suspension handelt. In einem solchen Fall kann das Substrat beispielsweise auch vor der Zugabe der Base oder der wässrigen basischen Lösung zunächst mit Wasser versetzt werden. Bevorzugt erfolgt die Zugabe der Base in Form von wässrigen, basischen Lösungen. Nach der Zugabe der wenigstens einen Base, vorzugsweise der wässrigen Lösung wenigstens einer solchen Base entsteht so eine wasserhaltige Mischung mit einem pH-Wert ≥ 8,5. Diese Mischung enthält sowohl flüssige als auch feste Bestandteile und kann somit auch als disperse Mischung beziehungsweise disperses System bezeichnet werden.

Die in Schritt (1) des erfindungsgemäßen Verfahrens eingesetzte anorganische Base liegt in einer bevorzugten Ausführungsform in Form einer wässrigen Lösung oder Dispersion, vorzugsweise in Form einer wässrigen Lösung, vor.

In einer bevorzugten Ausführungsform wird in Schritt (1) eine wässrige Lösung oder Dispersion einer anorganischen Base eingesetzt, die einen Anteil an anorganischer Base im Bereich von 30 bis 80 Gew.-%, vorzugsweise im Bereich von 35 bis 75 Gew.-%, besonders bevorzugt von 40 bis 65 Gew.-%, ganz besonders bevorzugt von 40 bis 60 Gew.-%, jeweils bezogen auf das Gesamtgewicht der wässrigen Lösung oder Dispersion der eingesetzten anorganischen Base, enthält. Besonders bevorzugt wird die wässrige Lösung oder Dispersion der wenigstens einen anorganischen Base in Schritt (1) dabei in einer Menge im Bereich von 1 bis 10 mL, vorzugsweise im Bereich von 2 bis 9 mL, besonders bevorzugt im Bereich von 2,5 bis 8 mL oder im Bereich von 3 bis 7 mL, pro L an dem wenigstens einen der Gärung zugänglichen Substrat, insbesondere pro L an Rohschlamm, eingesetzt.

Vorzugsweise werden Schritt (1) und Schritt (2) des erfindungsgemäßen Verfahrens jeweils bei einer Temperatur von < 98°C oder von < 95°C oder von < 90°C oder von < 80°C, besonders bevorzugt von < 70°C, insbesondere von < 65 °C, durchgeführt.

In einer anderen bevorzugten Ausführungsform werden Schritt (1) und Schritt (2) des erfindungsgemäßen Verfahrens jeweils bei einer Temperatur im Bereich von 10°C bis 90°C, vorzugsweise in einem Bereich von 20°C bis 80°C oder in einem Bereich von 30°C bis 80°C, besonders bevorzugt in einem Bereich von 30°C bis 70°C oder von 40°C bis 70°C durchgeführt. Insbesondere bevorzugt werden Schritt (1) und Schritt (2) des erfindungsgemäßen Verfahrens jeweils bei einer Temperatur im Bereich von 30°C bis 40°C oder von 50°C bis 60°C durchgeführt.

Bei der vorstehend genannten Temperatur handelt es sich vorzugsweise jeweils um die Substrattemperatur des wenigstens einen einer Gärung zumindest teilweise zugänglichen Substrats.

Dies bedeutet, dass das erfindungsgemäße Verfahren nur in geringem Maße eine Zuführung thermischer Energie benötigt. So wird das Verfahren, je nach Umgebungstemperatur, bei höheren oder niedrigen Temperaturen durchgeführt. Besonders vorteilhaft ist dabei auch, dass die Verfahrensanlage und das aufzuarbeitende Substrat nicht über 100 °C erhitzt werden müssen. Denn letzteres würde neben der notwendigen externen Zuführung von thermischer Energie, die gerade bei großtechnischen Anlagen und den darin verarbeiteten großen Mengen von Substrat besonders energieaufwendig und damit umweltbelastend ist, bedeuten, dass zusätzlich noch eine Druckerhöhung notwendig wäre, um die aufzuarbeitende Mischung und insbesondere das darin enthaltene Wasser flüssig zu halten. Aus dem Vorstehenden folgt zudem, dass das Verfahren, insbesondere die Schritte (1) und (2), also bevorzugt ohne externe Änderung des Umgebungsdrucks, das heißt bevorzugt bei Normaldruck, durchgeführt wird.

### Schritt (2)

Schritt (2) des erfindungsgemäßen Verfahrens sieht eine Behandlung der nach Schritt (1) erhaltenen wässrigen Mischung mit Ultraschall vor. Diese erfolgt vorzugsweise mittels wenigstens eines Ultraschallgeräts, insbesondere mittels wenigstens eines Hochleistungsultraschallgeräts. Insbesondere sieht Schritt (2) des erfindungsgemäßen Verfahrens eine Behandlung der nach Schritt (1) erhaltenen wässrigen Mischung mit Ultraschall vor, durch die eine Kavitation erzeugt wird.

Vorzugsweise erfolgt in Schritt (2) des erfindungsgemäßen Verfahrens durch die Ultraschallbehandlung eine Desintegration der nach Schritt (1) erhaltenen wässrigen Mischung, durch die diese in einen Zustand überführt wird, der eine einfache, schnell durchführbare und effektive mechanische Separation ermöglicht, welche in Schritt (3) durchgeführt wird. Durch Schritt (2) können beispielsweise gegebenenfalls vorhandene Aggregate in der nach Schritt (1) erhaltenen Mischung zerkleinert werden. Insbesondere können dabei - wenn Rohschlamm als Substrat eingesetzt wird - von darin enthaltenen Mikroorganismen gebildeten Gelen aus extrazellulären polymeren Substanzen (EPS) zerkleinert werden. Dabei erzeugt Hochleistungsultraschall hohe Druckschwankungen im Kilohertzbereich, welche mikroskopisch kleine Vakuumblasen in die Mischung reißen (Kavitation). Implodieren die Blasen zwischen den Druckwechseln, so entstehen Scherkräfte, die die umliegenden Zellwände, Gelstrukturen und/oder Molekülketten aufbrechen.

Der Ultraschall wird vorzugsweise mittels wenigstens einer Ultraschalleinheit erzeugt und in das zu behandelnde Substrat bzw. in die zu behandelnde Mischung eingetragen und verstärkt. Eine Ultraschalleinheit umfasst dabei wenigstens einen Ultraschallwandler (einen Transducer), der den Ultraschall erzeugt, und wenigstens einen Ultraschallschwinger (eine Sonotrode), mittels dessen (derer) der Ultraschall in das zu behandelnde Substrat bzw. die zu behandelnde Mischung eingetragen und verstärkt wird. In Schritt (2) des erfindungsgemäßen Verfahrens können eine oder mehrere, beispielsweise 1 bis 100 oder 2 bis 100 oder 1 bis 50 oder 2 bis 50 oder 1 bis 25 oder 2 bis 25 oder 10 bis 15 Ultraschalleinheiten eingesetzt werden.

Die Behandlung mit Ultraschall in Schritt (2) des erfindungsgemäßen Verfahrens kann in einer Phase oder auch periodisch, das heißt in mehreren Behandlungsphasen (Umläufen) erfolgen. Die Dauer einer Behandlungsphase liegt im Bereich von 0,2 bis 60 Sekunden. Beispielsweise erfolgt die Behandlung mit Ultraschall in Schritt (2) des erfindungsgemäßen Verfahrens in 1 bis 100, insbesondere in 1 bis 25 oder in 1 bis 20, Behandlungsphasen. In einer anderen bevorzugten Ausführungsform erfolgt die Behandlung mit Ultraschall in Schritt (2) des erfindungsgemäßen Verfahrens in wenigstens einer Behandlungsphase, vorzugsweise in wenigstens 2 oder wenigstens 3 Behandlungsphasen, besonders bevorzugt in wenigstens 5 Behandlungsphasen, ganz besonders bevorzugt in wenigstens 10 Behandlungsphasen, insbesondere in wenigstens 15 Behandlungsphasen. Die Anzahl und Dauer der Behandlungsphasen kann je nach Beschaffenheit der aus Schritt (1) eingetragenen Mischung angepasst werden. Vorzugsweise liegt die Dauer einer Behandlungsphase in Schritt (2) des erfindungsgemäßen Verfahrens im Bereich von 0,5 bis 30 Sekunden, besonders bevorzugt im Bereich von 1,0 bis 25 Sekunden, ganz besonders bevorzugt im Bereich von 2,0 bis 20 Sekunden oder in einem Bereich von 3,0 bis 15 Sekunden. Die einzelnen Behandlungsphasen können direkt aufeinanderfolgen, was sie vorzugsweise tun, oder von Zeitintervallen, beispielsweise von Zeitintervallen im Bereich von 10 Sekunden bis 10 Minuten, unterbrochen sein.

Vorzugsweise erfolgt Schritt (2) des Verfahrens kontinuierlich, d.h. wird im kontinuierlichen Betrieb durchgeführt. Insbesondere wird dabei die nach Schritt (1) erhaltene wässrige Mischung kontinuierlich durch wenigstens einen Ultraschallreaktor mit einer bestimmten Durchflussgeschwindigkeit geleitet, beispielsweise mit einer Durchflussgeschwindigkeit im Bereich von 500 L/h bis 2000 L/h. Die Verweilzeit der wässrigen Mischung in der sogenannten Kavitationszone, d.h. in dem vorzugsweise geometrischen Bereich um die in die wässrige Mischung tauchende Sonotrode der wenigstens einen Ultraschalleinheit, in dem die nach Schritt (1) erhaltene wässrige Mischung einer Behandlung mit Ultraschall unterworfen wird, entspricht dabei vorzugsweise der einen oder der mehreren Behandlungsphase(n). Wird Schritt (2) des Verfahrens kontinuierlich durchgeführt, so befindet sich das vorzugsweise in Schritt (2) eingesetzte wenigstens eine Ultraschallgerät in Dauerbetrieb, d.h. muss nicht - beispielsweise aufgrund einer zu erfolgenden notwendigen Kühlung des Geräts - nach einer bestimmten Zeit abgeschaltet werden. Vorzugsweise erfolgt Schritt (2) des erfindungsgemäßen Verfahrens während der ein oder mehreren Behandlungsphasen kontinuierlich.

Um die in Schritt (2) des erfindungsgemäßen Verfahrens eingesetzte nach Schritt (1) erhaltene wässrige Mischung effektiv mit Ultraschall zur Erzielung einer ausreichend starken Kavitation behandeln zu können, muss ein zur Durchführung von Schritt (2) eingesetztes Ultraschallgerät bestimmte Anforderungen insbesondere hinsichtlich der Sonotroden-Frequenz erfüllen. Dem Fachmann sind Ultraschallgeräte bekannt, die in Schritt (2) des erfindungsgemäßen Verfahrens eingesetzt werden können, beispielsweise aus WO 2009/103530 A1. Geeignete Hochleistungsultraschallgeräte sind u.a. von der Firma Bsonic GmbH entwickelt worden (beispielsweise das Gerät Cavit) und können von dieser Firma bezogen werden.

Die Behandlung mit Ultraschall in Schritt (2) des erfindungsgemäßen Verfahrens erfolgt in ein oder mehreren Behandlungsphasen, wobei jede Behandlungsphase bei einer Sonotroden-Frequenz in einem Bereich von 14 bis 22 kHz durchgeführt wird. Dabei erzeugt die Sonotrode jeder Ultraschalleinheit eine Sonotroden-Frequenz in einem Bereich von 14 bis 22 kHz. Vorzugsweise wird jede Behandlungsphase in Schritt (2) des erfindungsgemäßen Verfahrens bei einer Sonotroden-Frequenz in einem Bereich von 16 bis 22 kHz oder von 16 bis 20 kHz, besonders bevorzugt von 17 bis 19 kHz, durchgeführt.

Vorzugsweise werden die Schwingungen in jeder Ultraschalleinheit über die mit dem Transducer verbundene Sonotrode in das zu behandelnde Gemisch gemäß Schritt (2) des erfindungsgemäßen Verfahrens mit einer Amplitude von wenigstens 30 µm (center-to-peak), besonders bevorzugt von wenigstens 40 µm (center-to-peak), ganz besonders bevorzugt von wenigstens 50 µm (center-to-peak), eingetragen.

Die Behandlung mit Ultraschall in Schritt (2) des erfindungsgemäßen Verfahrens erfolgt vorzugsweise in ein oder mehreren Behandlungsphasen, wobei in jeder Behandlungsphase eine Leistung von wenigstens 1 kW, vorzugsweise von wenigstens 2 kW, besonders bevorzugt von wenigstens 3 kW, vorzugsweise in Form einer Kavitation, in das zu behandelnde Gemisch eingetragen wird. Diese Leistung wird dabei vorzugsweise durch die wenigstens eine Ultraschalleinheit in die wässrige Mischung eingetragen.

Vorzugsweise erfolgt die Behandlung mit Ultraschall in Schritt (2) des erfindungsgemäßen Verfahrens in eine oder mehreren Behandlungsphasen, wobei in jeder Behandlungsphase eine Leistung in das zu behandelnde Gemisch eingetragen wird, die einem Leistungseintrag von wenigstens 30 W/cm², vorzugsweise von wenigstens 35 W/cm², besonders bevorzugt von wenigstens 40 W/cm², insbesondere von wenigstens 45 W/cm², an der Sonotroden-Arbeitsfläche entspricht.

Vorzugsweise erfolgt die Behandlung mit Ultraschall in Schritt (2) des erfindungsgemäßen Verfahrens in eine oder mehreren Behandlungsphasen, wobei in jeder Behandlungsphase eine Leistung in das zu behandelnde Gemisch eingetragen wird, die einem Leistungseintrag im Bereich von 1 bis 10 W/cm², vorzugsweise im Bereich von 2 bis 10 W/cm², besonders bevorzugt im Bereich von 3 bis 10 W/cm² oder im Bereich von 4 bis 10 W/cm², insbesondere im Bereich von 5 bis 10 W/cm², am gesamten Sonotroden-Umfang entspricht.

Besonders bevorzugt erfolgt die Behandlung mit Ultraschall in Schritt (2) des erfindungsgemäßen Verfahrens in ein oder mehreren Behandlungsphasen, wobei in jeder Behandlungsphase eine Leistung von wenigstens 1 kW, vorzugsweise von wenigstens 2 kW, besonders bevorzugt von wenigstens 3 kW, vorzugsweise in Form einer Kavitation, in das in das zu behandelnde Gemisch eingetragen wird, was einem Leistungseintrag von wenigstens 30 W/cm², vorzugsweise von wenigstens 35 W/cm², besonders bevorzugt von wenigstens 40 W/cm², insbesondere von wenigstens 45 W/cm², an der Sonotroden-Arbeitsfläche entspricht, oder was einem Leistungseintrag im Bereich von 1 bis 10 W/cm², vorzugsweise im Bereich von 2 bis 10 W/cm², besonders bevorzugt im Bereich von 3 bis 10 W/cm² oder im Bereich von 4 bis 10 W/cm², insbesondere im Bereich von 5 bis 10 W/cm², am gesamten Sonotroden-Umfang entspricht.

Vorzugsweise ist das in Schritt (2) vorzugsweise eingesetzte Ultraschallgerät dazu geeignet, 0,5 bis 3 m³/h, vorzugsweise 0,5 bis 2 m³/h, des zu behandelnden Gemisches im kontinuierlichen Betrieb mit Ultraschall behandeln. Der Energieeintrag liegt dabei vorzugsweise im Bereich von 2-20 kJ/L, besonders bevorzugt 3-15 kJ/L an Gemisch.

Vorzugsweise wird Schritt (2) in einem Ultraschallreaktor durchgeführt, der wenigstens eine Ultraschalleinheit umfasst. Vorzugsweise ist dieser Reaktor so gestaltet, dass die zu behandelnde Mischung kontinuierlich einer Kavitation unterworfen werden kann. Vorzugsweise erfolgt die Behandlung in einer Behandlungsphase oder periodisch.

Vorzugsweise liegt die wässrige Mischung nach Durchführung von Schritt (2) als wässrige Mischung vor, die eine flüssige Phase und zudem davon klar unterscheidbare und trennbare feste Bestandteile umfasst.

### Schritt (3)

Schritt (3) des erfindungsgemäßen Verfahrens sieht eine Auftrennung der nach Schritt (2) erhaltenen wässrigen Mischung in eine flüssige wässrige Phase und eine disperse Mischung enthaltend Cellulose oder eine Mischung enthaltend wenigstens Cellulose und wenigstens Lignocellulose vor.

Vorzugsweise erfolgt die Auftrennung in Schritt (3) in Form einer mechanischen Separation. Im Rahmen dieser Separationsstufe werden die dem Fachmann in diesem Zusammenhang bekannten mechanischen Separationsverfahren zur Auftrennung von dispersen Systemen in Feststoffe und Flüssigkeiten eingesetzt. Bei diesen Separationsverfahren handelt es sich insbesondere um das Sedimentieren, Zentrifugieren und Filtrieren beziehungsweise Siebfiltrieren, gegebenenfalls in Kombination mit Pressen (Anwendung von Filterpressen). Solche Separationsverfahren sind beispielsweise durch Verwendung gängiger Anlagen und Geräte, wie sie dem Fachmann auf dem Gebiet bekannt sind, durchführbar. In vielen dieser Anlagen und Geräte werden auch mehrere der genannten Separationsverfahren beziehungsweise Separationsprinzipien miteinander kombiniert. Einsetzbare Anlagen sind beispielsweise Vakuumbandfilter. Bei diesem Siebschritt bzw. Siebfiltrationsschrittes wird die Porengröße des Siebs beziehungsweise des Filters so gewählt, dass die anisotropen, länglichen Fasern von Cellulose oder einer Mischung enthaltend wenigstens Cellulose und wenigstens Lignocellulose auf dem Sieb oder Filtermaterial verbleiben, während die sphärischen anorganischen Partikel, die in der Regel Teilchengrößen von kleiner 10 µm aufweisen (gemessen mittels Mikroskop bzw. Nasssiebung) zusammen mit dem noch vorhandenen bzw. gegebenenfalls zugegebenen Wasser durch das Sieb hindurchtreten. Entsprechende Sieb- und Filtrationsanlagen sowie eine entsprechende Auswahl von Sieben und/oder Filtern können vom Fachmann problemlos ausgewählt werden. Dieser Sieb- beziehungsweise Siebfiltrationsschritt kann bevorzugt noch durch eine zusätzlich erfolgende Spülung des Siebrückstands (des Fasermaterials) mit Wasser ergänzt werden, wodurch gegebenenfalls innerhalb des Fasermaterials befindliche und/oder an den Fasern anhaftende anorganische Partikel ebenfalls durch das Sieb gespült werden. Ein Überblick über einsetzbare Separationsverfahren und Separationsprinzipien ergibt sich aus der allgemeinen Fachliteratur, beispielsweise aus "Technische Mikrobiologie" von Hermann Kretzschmar, Seiten 265 bis 286, (Parey, 1968, ISBN 3489715144) oder auch dem Handbuch "Filters and Filtration Handbook" (Elsevier, Advanced Technology, 4th Edition, ISBN 185617322).

Beispielsweise können Filterpressen, Drehfilteranlagen, Siebtrommelpressen, Bandpressen, Pressschnecken-Separatoren, Zentrifugen verschiedenster Größe und Bauart wie beispielsweise Dekanter (Schneckenaustragszentrifugen), Siebkerbbeziehungsweise Filterzentrifugen, Röhrenzentrifugen, Multikammerzentrifugen oder Düsen- beziehungsweise Tellerseparatoren, sowie Vakuumbandfilter mit Siebeinlagen eingesetzt werden.

Bevorzugt stellt Schritt (3) des erfindungsgemäßen Verfahrens mindestens ein Separationsverfahren ausgewählt aus der Gruppe der Siebfiltrations- und Zentrifugationsverfahren sowie Verfahren, die die vorgenannten Verfahren miteinander kombinieren, dar. Vorzugsweise erfolgt die Auftrennung in Schritt (3) in Form somit in einer mechanischen Separation, besonders bevorzugt mittels einer Siebfiltration, einer Zentrifugation oder einer kombinierten Siebfiltrationszentrifugation. Bei der Kombination der Verfahren richtet sich die Reihenfolge des Einsatzes der Verfahren maßgeblich nach der Beschaffenheit der zu separierenden Mischung, insbesondere deren Fasergehalt und/oder deren Gelgehalt. Bevorzugt eingesetzt werden hierzu Pressschnecken- Separatoren und/oder Dekanter (Schneckenaustragszentrifugen).

Nach Abschluss des Schritts (2) des erfindungsgemäßen Verfahrens wird die mit Ultraschall behandelte wässrige Mischung vorzugsweise in einen Dekanter, das heißt in eine Schneckenaustragszentrifuge, überführt. Hier folgt eine Abtrennung der flüssigen wässrigen Phase enthaltend insbesondere die gelartigen Bestandteile von festen dispersen Bestandteilen der Mischung. Bei den festen dispersen Bestandteilen handelt es sich insbesondere um faseriges Material, das hauptsächlich aus Cellulose oder einer Mischung aus Cellulose und Lignocellulose besteht. Das so abgetrennte Material ist nicht trocken, sondern besitzt einen Wassergehalt. Vorzugsweise weist die disperse Mischung enthaltend Feststoffe einen Festkörpergehalt im Bereich von 10 bis 40 Gew.-%, besonders bevorzugt in einem Bereich von 15 bis 35 Gew.-% oder im Bereich von 15 bis 30 Gew.%, jeweils bezogen auf das Gesamtgewicht der dispersen Mischung enthaltend Feststoffe, auf. Vorzugsweise enthält die gemäß Schritt (3) erhaltene disperse Mischung Cellulose oder eine Mischung aus Cellulose und Lignocellulose in einem Anteil von 75 bis 95 Gew.-% oder von 80 bis 90 Gew.-%, jeweils bezogen auf den Festkörpergehalt der dispersen Mischung enthaltend Feststoffe,

Die nach Schritt (3) erhaltene disperse Mischung enthaltend Cellulose oder eine Mischung aus Cellulose und Lignocellulose hat bereits einen für viele Anwendungszwecke ausreichenden Anteil an Cellulose oder eine Mischung aus Cellulose und Lignocellulose. Gegebenenfalls kann die nach Schritt (3) erhaltene disperse Mischung getrocknet werden oder beispielsweise durch Pressen, insbesondere Hochleistungspressen, weiter entwässert werden, um den Feststoffanteil in dieser Mischung, weiter zu erhöhen.

Die Reinheit der nach Schritt (3) bzw. einem optionalen Schritt (4) erhältlichen dispersen Mischung enthaltend Cellulose oder eine Mischung enthaltend wenigstens Cellulose und wenigstens Lignocellulose an darin enthaltener Cellulose kann bestimmt werden, in dem zunächst der Stickstoffgehalt der dispersen Mischung gemäß DIN EN 25663 bestimmt wird, mittels dessen ermittelt werden kann, ob die Mischung frei von N-haltigen Verbindungen ist. Zudem kann zur Bestimmung der Reinheit der Trockenrückstand der dispersen Mischung nach EN 12880 (S2A) und der Glührückstand der dispersen Mischung nach EN 12879 (S3A) bestimmt werden.

### Schritt (4)

Der optionale Schritt (4) des erfindungsgemäßen Verfahrens sieht eine Reinigung der nach Schritt (3) erhaltenen dispersen Mischung enthaltend Cellulose oder einer Mischung enthaltend wenigstens Cellulose und wenigstens Lignocellulose vor. Schritt (4) dient somit zur Aufreinigung der nach Schritt (3) erhaltenen dispersen Mischung, um den Anteil an Cellulose oder einer Mischung enthaltend wenigstens Cellulose und wenigstens Lignocellulose in dieser dispersen Mischung zu erhöhen.

Vorzugswese erfolgt die Reinigung in Schritt (4) durch Waschen, Dekantieren, Sieben und/oder Siebfiltration unter Zugabe von Wasser, besonders bevorzugt durch Waschen mit Wasser.

Die gemäß Schritt (3) erhaltene disperse Mischung enthält Cellulose oder einer Mischung enthaltend wenigstens Cellulose und wenigstens Lignocellulose und kann gegebenenfalls noch weitere anorganische Feststoffpartikel enthalten. Unter Zugabe von Wasser kann diese in Schritt (4) gewaschen, dekantiert, gesiebt beziehungsweise siebfiltriert werden, gegebenenfalls unter Anwendung von Pressdruck. Einsetzbare Anlagen sind beispielsweise Vakuumbandfilter. Bei diesem Siebschritt bzw. Siebfiltrationsschrittes wird die Porengröße des Siebs beziehungsweise des Filters so gewählt, dass die anisotropen, länglichen Fasern von Cellulose oder einer Mischung enthaltend wenigstens Cellulose und wenigstens Lignocellulose auf dem Sieb oder Filtermaterial verbleiben, während die sphärischen anorganischen Partikel, die in der Regel Teilchengrößen von kleiner 10 µm aufweisen (gemessen mittels Mikroskop bzw. Nasssiebung) zusammen mit dem noch vorhandenen bzw. gegebenenfalls zugegebenen Wasser durch das Sieb hindurchtreten. Entsprechende Sieb- und Filtrationsanlagen sowie eine entsprechende Auswahl von Sieben und/oder Filtern können vom Fachmann problemlos ausgewählt werden. Dieser Sieb- beziehungsweise Siebfiltrationsschritt kann bevorzugt noch durch eine zusätzlich erfolgende Spülung des Siebrückstands (des Fasermaterials) mit Wasser ergänzt werden, wodurch gegebenenfalls innerhalb des Fasermaterials befindliche und/oder an den Fasern anhaftende anorganische Partikel ebenfalls durch das Sieb gespült werden. Es resultiert dann eine wässrige Dispersion der gegebenenfalls vorhandenen anorganischen Partikel.

Die so erhaltenen Fasern von Cellulose oder einer Mischung enthaltend wenigstens Cellulose und wenigstens Lignocellulose werden beispielsweise durch Pressen, insbesondere Hochleistungspressen, weiter entwässert, und können dann nach gegebenenfalls weiterer Trocknung weiterverarbeitet werden.

Die nachfolgenden Beispiele und Vergleichsbeispiele dienen der Erläuterung der Erfindung, sind jedoch nicht einschränkend auszulegen.

### Beispiele und Vergleichsbeispiele

### 1. Beispielhafte Beschreibung des erfindungsgemäßen Verfahrens

Das erfindungsgemäße Verfahren wird unter Einsatz von 1 m³ eines Rohschlamms (enthaltend 4,75 Gew.-% Feststoffe gemäß EN 12880 (S2A) über Ermittlung des Trockenrückstands) durchgeführt, der mittels Natronlauge auf einen pH-Wert von 10 eingestellt wird (Schritt 1). Anschließend erfolgt eine Ultraschallbehandlung in einer Behandlungsphase mittels eines Hochleistungsultraschallgeräts der Firma Bsonic GmbH (Halver, Deutschland; Ultraschallbedingungen: Dauer einer Behandlungsphase: 10 Sekunden; Sonotrodenamplitude 40 µm, Sonotroden-Frequenz: 18 kHz; Leistungseintrag von 2,5 kW in das zu behandelnde Gemisch) (Schritt 2). Die anschließende Abtrennung der dispersen Mischung enthaltend Cellulose oder einer Mischung enthaltend wenigstens Cellulose und wenigstens Lignocellulose von der flüssigen wässrigen Phase der nach Schritt (2) erhaltenen wässrigen Mischung erfolgt entweder mittels eines Dekanters des Typs UCD 305 der Firma Gea Westfalia Separator Group GmbH (Oelde, Deutschland) oder mittels eines Siebbandtyps mit Vakuum und einer Auftragsrakelung mit Abstreifung (Maschengröße des Siebs: 0,4 mm) und liefert jeweils ca. 100 kg einer dispersen Mischung enthaltend Cellulose oder einer Mischung enthaltend wenigstens Cellulose und wenigstens Lignocellulose (enthaltend ca. 81,5 Gew.-% Wasser, bezogen auf das Gesamtgewicht der dispersen Mischung) (Schritt 3). Die so erhaltene disperse Mischung enthält Cellulose oder einer Mischung aus Cellulose und Lignocellulose in einem Anteil von ca. 80 bis 90 Gew.-%, bezogen auf den gesamten Festkörpergehalt der dispersen Mischung. Gegebenenfalls kann die nach Schritt (3) erhaltene disperse Mischung - je nach gewünschten Anwendungszweck - weiter gereinigt werden, um den Anteil an Cellulose oder einer Mischung aus Cellulose und Lignocellulose in der dispersen Mischung weiter zu erhöhen, beispielsweise durch Waschen und gegebenenfalls Sieben unter Zugabe von Wasser (Schritt (4)).

### 2. Untersuchung des Einflusses des Schrittes (2) auf das erfindungsgemäße Verfahren

Die Untersuchung des Einflusses des Schrittes (2) auf das erfindungsgemäße Verfahren erfolgt unter Laborbedingungen. Dabei wird eine Probe Rohschlamm auf 20°C oder 60°C erhitzt und zu dieser Mischung werden in Schritt (1) des erfindungsgemäßen Verfahrens als anorganische Base jeweils 6 mL NaOH einer wässrigen NaOH-Lösung pro L an als Substrat verwendetem Rohschlamm unter mechanischem Rühren gegeben. Die eingesetzte NaOH-Lösung enthält jeweils 45 Gew.-% NaOH, bezogen auf das Gesamtgewicht der wässrigen NaOH-Lösung. Der Schritt (1) des erfindungsgemäßen Verfahrens wird somit jeweils bei einer Temperatur von 20°C oder von 60°C durchgeführt. Schritt (1) wird über eine Dauer von 10 Minuten unter Rühren durchgeführt.

Anschließend erfolgt eine Behandlung der Probe mit Ultraschall bei einer Temperatur von 20°C oder von 60°C. Die Dauer einer Behandlungsphase mit Ultraschall in Schritt (2) beträgt 1 Sekunde. Es werden entweder 3, 5, 10 oder 20 jeweils direkt aufeinanderfolgende Behandlungsphasen durchgeführt. Es wird das unter 1. beschriebene Ultraschallgerät der Firma Bsonic GmbH in Schritt (2) eingesetzt.

Anschließend wird eine Zentrifugation (Becherzentrifugation) (für eine Dauer von 30 Minuten bei 3000 Umdrehungen pro Minute) des so unter Durchführung der Schritte (1) und (2) behandelten Rohschlamms durchgeführt und der Zentrifugenüberstand bzw. der Zentrifugenrückstand wie in nachfolgender Tabelle 1 angegeben untersucht. Der Zentrifugenrückstand umfasst dabei die nach Schritt (3) des erfindungsgemäßen Verfahrens erhaltene disperse Mischung enthaltend Cellulose oder eine Mischung aus Cellulose und Lignocellulose. Der Zentrifugenüberstand umfasst dabei die nach Schritt (3) des erfindungsgemäßen Verfahrens erhaltene wässrige flüssige Phase.

Zum Vergleich wird ein entsprechendes Verfahren jeweils ohne Durchführung von Schritt (2) durchgeführt (Vergleichsbeispiele V1 und V2). Dazu wird der nach Durchführung von Schritt (1) erhaltene Rohschlamm direkt zentrifugiert und der Zentrifugenüberstand bzw. der Zentrifugenrückstand wie in nachfolgender Tabelle 1 angegeben analog untersucht.

Ferner wird ein Vergleichsverfahren ohne Durchführung der Schritte (1) und (2) durchgeführt (Vergleichsbeispiel V3). Dazu wird der Rohschlamm direkt zentrifugiert und der Zentrifugenüberstand bzw. der Zentrifugenrückstand wie in nachfolgender Tabelle 1 angegeben analog untersucht.

Der chemische Sauerstoffbedarf (CSB) des Zentrifugenüberstands wird jeweils gemäß DIN 38409 H41 bestimmt. Dieser ist ein Maß für die gelösten organischen oxidierbaren Inhaltsstoffe im Zentrifugenüberstand. Der CSB gibt die Menge an Sauerstoff (in mg/L) an, d.h. die Menge an Sauerstoff in mg pro L des Zentrifugationsüberstands, die zur Oxidation der in diesem Liter enthaltenen organischen oxidierbaren Inhaltsstoffe benötigt wird.

Je höher der ermittelte CSB-Wert ist, desto mehr gelöste organische Materialien sind im Zentrifugenüberstand enthalten, d.h. desto mehr dieser Materialien können anaerob im Faulprozess umgesetzt werden, wodurch dieser effizienter und wirtschaftlicher gestaltet werden kann. Ferner ist ein hoher CSB-Wert ein Maß für die Menge an organischen Verbindungen, die von der durch das erfindungsgemäße Verfahren zu gewinnenden Cellulose oder der zu gewinnenden Mischung enthaltend wenigstens Cellulose und wenigstens Lignocellulose effizient abgetrennt werden konnten. Wie aus nachstehender Tabelle 1 ersichtlich ist kann mit dem erfindungsgemäßen Verfahren ein CSB-Wert des Zentrifugenüberstands von über 16 000 mg/L CSB (Beispiel 2d) erzielt werden, wohingegen ohne Ultraschallbehandlung gemäß Schritt (2) nur ein signifikant geringerer Wert von 11 000 mg/L CSB (Vergleichsbeispiel V2) erreicht wird. Im Fall eines gänzlich unbehandelten Rohschlamms wird lediglich ein CSB-Wert von 1 100 mg/L erreicht (Vergleichsbeispiel V3).

Zudem wird die Menge an Zentrifugenrückstand in g pro L an eingesetztem Rohschlamm bestimmt, aus der wiederum der Feststoffgehalt des Zentrifugenrückstands sowie der Trockenrückstand des Zentrifugenrückstands und gegebenenfalls auch der Glührückstand bestimmt werden können.

Je niedriger die Menge an Zentrifugenrückstand ist, desto größer ist die Menge an zu gewinnender Cellulose oder an der zu gewinnenden Mischung enthaltend wenigstens Cellulose und wenigstens Lignocellulose in der nach Schritt (3) erhaltenen dispersen Mischung, d.h. desto mehr die zu gewinnenden Produkte verunreinigenden weiteren Verbindungen konnten mittels der Ultraschallbehandlung gemäß Schritt (2) von diesen abgetrennt werden konnten, wodurch eine Isolierung von Cellulose oder der Mischung enthaltend wenigstens Cellulose und wenigstens Lignocellulose aus dem Zentrifugenrückstand möglich ist. Wie aus nachstehender Tabelle 1 ersichtlich ist kann mit dem erfindungsgemäßen Verfahren ein Zentrifugenrückstand von 73,3 g (aus einem Liter Rohschlamm) (Beispiel 2d) erzielt werden, wohingegen der Zentrifugenrückstand ohne Ultraschallbehandlung mehr als doppelt so hoch ist (159,6 g/L Rohschlamm im Fall von Vergleichsbeispiel 2).

**Tabelle 1**

| Beispiel/Vergleichsbeispiel | Temperatur bei Durchführung von Schritt (1) | Temperatur bei Durchführung von Schritt (2) | Anzahl Behandlungsphasen mit Ultraschall in Schritt (2) | CSB des ZentrifugenÜberstands [mg/L] | Zentrifugenrückstand [g/L an Rohschlamm] | Festkörpergehalt des Zentrifugenrückstands [Gew.-%] | Trockenrückstand des Zentrifugenrückstands [g/L an Rohschlamm] |
|---|---|---|---|---|---|---|---|
| Beispiel 1a (B1a) | 20°C | 20°C | 3 | 10 900 | 217,0 | 12,2 | 26,5 |
| Beispiel 1b (B1b) | 20°C | 20°C | 5 | 11 700 | 195,0 | 12,9 | 25,2 |
| Beispiel 1c (B1c) | 20°C | 20°C | 10 | 11 700 | 197,6 | 13,0 | 25,6 |
| Beispiel 1d (B1d) | 20°C | 20°C | 20 | 13 000 | 173,9 | 13,7 | 23,9 |
| Vergleichsbeispiel 1 (V1) | 20°C | 20°C | - | 9 540 | 266,8 | 10,8 | 28,8 |
| Beispiel 2a (B2a) | 60°C | 60°C | 3 | 13 700 | 127,3 | 16,3 | 20,7 |
| Beispiel 2b (B2b) | 60°C | 60°C | 5 | 14 200 | 105,2 | 17,0 | 17,9 |
| Beispiel 2c (B2c) | 60°C | 60°C | 10 | 15 600 | 106,6 | 18,1 | 19,3 |
| Beispiel 2d (B2d) | 60°C | 60°C | 20 | 16 400 | 73,3 | 18,0 | 13,2 |
| Vergleichsbeispiel 2 (V2) | 60°C | 60°C | - | 11 200 | 159,6 | 13,9 | 22,2 |
| Vergleichsbeispiel 3 (V3) | - | - | - | 1 100 | n.b. | n.b. | 33,2 |

| | | | | | | | |
|---|---|---|---|---|---|---|---|
| n.b. = wurde nicht bestimmt | | | | | | | |

## Patentansprüche

1. Ein Verfahren zur Gewinnung von Cellulose oder einer Mischung enthaltend wenigstens Cellulose und wenigstens Lignocellulose aus wenigstens einem der Gärung zumindest teilweise zugänglichen Substrat umfassend wenigstens die Schritte (1) bis (3) und gegebenenfalls (4), nämlich
(1) Überführung des Substrats durch Zugabe wenigstens einer anorganischen Base in eine wässrige Mischung mit einem pH-Wert von ≥ 8,5,
(2) Behandlung der nach Schritt (1) erhaltenen wässrigen Mischung mit Ultraschall,
(3) Auftrennung der nach Schritt (2) erhaltenen wässrigen Mischung in eine flüssige wässrige Phase und eine disperse Mischung enthaltend Cellulose oder eine Mischung enthaltend wenigstens Cellulose und wenigstens Lignocellulose und
(4) gegebenenfalls Reinigung der nach Schritt (3) erhaltenen dispersen Mischung enthaltend Cellulose oder eine Mischung enthaltend wenigstens Cellulose und wenigstens Lignocellulose,
wobei Schritt (1) und Schritt (2) des Verfahrens jeweils bei einer Temperatur < 100°C durchgeführt werden, und
wobei die Behandlung mit Ultraschall in Schritt (2) in einer oder in mehreren Behandlungsphasen erfolgt,
wobei die Dauer einer Behandlungsphase im Bereich von 0,2 bis 60 Sekunden liegt und jede Behandlungsphase bei einer Sonotroden-Frequenz in einem Bereich von 14 bis 22 kHz durchgeführt wird.

2. Das Verfahren gemäß Anspruch 1, **dadurch gekennzeichnet, dass** die Dauer einer Behandlungsphase in Schritt (2) im Bereich von 0,5 bis 30 Sekunden liegt.

3. Das Verfahren gemäß Anspruch 1 oder 2, **dadurch gekennzeichnet, dass** jede Behandlungsphase in Schritt (2) bei einer Sonotroden-Frequenz in einem Bereich von 16 bis 20 kHz durchgeführt wird.

4. Das Verfahren gemäß einem der vorstehenden Ansprüche, **dadurch gekennzeichnet, dass** in jeder Behandlungsphase in Schritt (2) eine Leistung von wenigstens 2 kW in das zu behandelnde Gemisch eingetragen wird.

5. Das Verfahren gemäß Anspruch 4, **dadurch gekennzeichnet, dass** diese Leistung einem Leistungseintrag im Bereich von 1 bis 10 W/cm² an dem gesamten Sonotroden-Umfang entspricht.

6. Das Verfahren gemäß einem der vorstehenden Ansprüche, **dadurch gekennzeichnet, dass** die Behandlung mit Ultraschall in Schritt (2) des erfindungsgemäßen Verfahrens mittels wenigstens einer Ultraschalleinheit erfolgt, wobei jede Ultraschalleinheit wenigstens einen Ultraschallwandler und wenigstens einen Ultraschallschwinger umfasst.

7. Das Verfahren gemäß einem der vorstehenden Ansprüche, **dadurch gekennzeichnet, dass** Schritt (1) und Schritt (2) des Verfahrens jeweils bei einer Temperatur im Bereich von 50°C bis 70°C durchgeführt werden.

8. Das Verfahren gemäß einem der vorstehenden Ansprüche, **dadurch gekennzeichnet, dass** in Schritt (1) ein pH-Wert im Bereich von 9 bis 13 eingestellt wird.

9. Das Verfahren gemäß einem der vorstehenden Ansprüche, **dadurch gekennzeichnet, dass** in Schritt (1) als wenigstens eine anorganische Base eine Base ausgewählt aus der Gruppe bestehend aus NaOH, KOH, Na₂CO₃, K₂CO₃, CaO, Ca(OH)₂ und MgO sowie Mischungen davon eingesetzt wird.

10. Das Verfahren gemäß einem der vorstehenden Ansprüche, **dadurch gekennzeichnet, dass** in Schritt (1) eine wässrige Lösung oder Dispersion einer anorganischen Base eingesetzt wird, die einen Anteil an anorganischer Base im Bereich von 30 bis 80 Gew.-%, bezogen auf das Gesamtgewicht der die wenigstens eine anorganische Base enthaltenen wässrigen Lösung oder Dispersion, enthält.

11. Das Verfahren gemäß Anspruch 10, **dadurch gekennzeichnet, dass** die wässrige Lösung oder Dispersion der anorganischen Base in Schritt (1) in einer Menge im Bereich von 1 bis 10 mL pro L an dem wenigstens einen der Gärung zugänglichen Substrat eingesetzt wird.

12. Das Verfahren gemäß einem der vorstehenden Ansprüche, **dadurch gekennzeichnet, dass** die Auftrennung in Schritt (3) in Form einer mechanischen Separation erfolgt.

13. Das Verfahren gemäß einem der vorstehenden Ansprüche, **dadurch gekennzeichnet, dass** die Auftrennung in Schritt (3) mittels einer Siebfiltration, einer Zentrifugation oder einer kombinierten Siebfiltrationszentrifugation erfolgt.

14. Das Verfahren gemäß einem der vorstehenden Ansprüche, **dadurch gekennzeichnet, dass** die Reinigung in Schritt (4) durch Waschen, Dekantieren, Sieben und/oder Siebfiltration unter Zugabe von Wasser erfolgt.

15. Das Verfahren gemäß einem der vorstehenden Ansprüche, **dadurch gekennzeichnet, dass** als wenigstens ein der Gärung zumindest teilweise zugängliches Substrat aus Abwasser stammender Rohschlamm eingesetzt wird.

## Claims

1. A process for obtaining cellulose or a mixture containing at least cellulose and at least lignocellulose from at least one substrate that is at least to some extent amenable to fermentation comprising at least the steps (1) to (3) and optionally (4), namely
(1) conversion of the substrate via addition of at least one inorganic base into an aqueous mixture having a pH ≥ 8.5,
(2) ultrasound treatment of the aqueous mixture obtained after step (1),
(3) separation of the aqueous mixture obtained after step (2) into a liquid aqueous phase and a disperse mixture containing cellulose or a mixture containing at least cellulose and at least lignocellulose and
(4) optionally purification of the disperse mixture obtained after step (3) containing cellulose or a mixture containing at least cellulose and at least lignocellulose,
wherein step (1) and step (2) of the process are both carried out at a temperature of < 100°C and
wherein the ultrasound treatment in step (2) is effected in one or more treatment phases,
where the duration of a treatment phase is in the range from 0.2 to 60 seconds and each treatment phase is carried out at a sonotrode frequency in a range from 14 to 22 kHz.

2. The process as claimed in claim 1, **characterized in that** the duration of a treatment phase in step (2) is in the range of 0.5 to 30 seconds.

3. The process as claimed in claim 1 or 2, **characterized in that** each treatment phase in step (2) is carried out at a sonotrode frequency in a range from 16 to 20 kHz.

4. The process as claimed in any of the preceding claims, **characterized in that** a power of at least 2 kW is supplied to the mixture to be treated in each treatment phase in step (2).

5. The process as claimed in claim 4, **characterized in that** this power corresponds to a power input in the range of 1 to 10 W/cm² of the entire circumference of the sonotrodes.

6. The process as claimed in any of the preceding claims, **characterized in that** the ultrasound treatment in step (2) of the process is carried out by means of at least one ultrasound unit, wherein each ultrasound unit comprises at least one ultrasound transducer and at least one ultrasound oscillator.

7. The process as claimed in any of the preceding claims, **characterized in that** step (1) and step (2) of the process are both carried out at a temperature in the range of 50°C to 70°C.

8. The process as claimed in any of the preceding claims, **characterized in that** a pH in the range of 9 to 13 is set in step (1).

9. The process as claimed in any of the preceding claims, **characterized in that** the at least one inorganic base used in step (1) is a base selected from the group consisting of NaOH, KOH, Na₂CO₃, K₂CO₃, CaO, Ca(OH)₂ and MgO and also mixtures thereof.

10. The process as claimed in any of the preceding claims, **characterized in that** an aqueous solution or dispersion of an inorganic base is used in step (1) comprising a proportion of inorganic base in the range of 30 to 80% by weight, based on the total weight of the aqueous solution or dispersion containing the at least one inorganic base.

11. The process as claimed in claim 10, **characterized in that** the aqueous solution or dispersion of the inorganic base in step (1) is used in an amount in the range of 1 to 10 mL per L of the at least one substrate that is amenable to fermentation.

12. The process as claimed in any of the preceding claims, **characterized in that** the separation in step (3) is in the form of a mechanical separation.

13. The process as claimed in any of the preceding claims, **characterized in that** the separation in step (3) is effected by means of sieve filtration, centrifugation or a combined sieve filtration centrifugation.

14. The process as claimed in any of the preceding claims, **characterized in that** the purification in step (4) is effected by washing, decanting, sieving and/or sieve filtration by addition of water.

15. The process as claimed in any of the preceding claims, **characterized in that** raw sludge originating from waste water is used as the at least one substrate that is at least to some extent amenable to fermentation.

## Revendications

1. Procédé pour la récupération de la cellulose ou d'un mélange contenant au moins de la cellulose et au moins de la lignocellulose, à partir d'au moins un substrat au moins partiellement accessible à la fermentation, le procédé comprenant au moins les étapes (1) à (3), et le cas échéant (4), suivantes :
(1) convertir le substrat, par addition d'au moins une base inorganique, en un mélange aqueux avec un pH de ≥ 8,5,
(2) traiter le mélange aqueux obtenu dans l'étape (1) par les ultrasons,
(3) séparer le mélange aqueux obtenu dans l'étape (2) en une phase liquide aqueuse et un mélange dispersé contenant de la cellulose ou un mélange contenant au moins de la cellulose et au moins de la lignocellulose, et
(4) le cas échéant purifier le mélange dispersé contenant de la cellulose ou un mélange contenant au moins de la cellulose et au moins de la lignocellulose, obtenu dans l'étape (3),
dans lequel l'étape (1) et l'étape (2) du procédé sont en chaque cas effectuées à une température < 100 °C, et
dans lequel le traitement par les ultrasons dans l'étape (2) est effectué en une ou plusieurs phases de traitement,
dans lequel la durée d'une phase de traitement est dans la rangée de 0,2 à 60 secondes, et chaque phase de traitement est effectuée avec une fréquence de la sonotrode dans une rangée de 14 à 22 kHz.

2. Procédé selon la revendication 1, **caractérisé en ce que** la durée d'une phase de traitement dans l'étape (2) est dans la rangée de 0,5 à 30 secondes.

3. Procédé selon la revendication 1 ou 2, **caractérisé en ce que** chaque phase de traitement dans l'étape (2) est effectuée à une fréquence de la sonotrode dans une rangée de 16 à 20 kHz.

4. Procédé selon l'une des revendications précédentes, **caractérisé en ce que** dans chaque phase de traitement dans l'étape (2) une puissance d'au moins 2 kW est introduite dans le mélange à traiter.

5. Procédé selon la revendication 4, **caractérisé en ce que** cette puissance correspond à une puissance utilisée dans la rangée de 1 à 10 W/cm² sur la circonférence totale de la sonotrode.

6. Procédé selon l'une des revendications précédentes, **caractérisé en ce que** le traitement par les ultrasons dans l'étape (2) du procédé selon la revendication est effectué au moyen d'au moins une unité à ultrasons, chaque unité à ultrasons comprenant au moins un transducteur ultrasonique et au moins un émetteur d'ultrasons.

7. Procédé selon l'une des revendications précédentes, **caractérisé en ce que** l'étape (1) et l'étape (2) du procédé sont en chaque cas effectuées à une température dans la rangée de 50 °C à 70 °C.

8. Procédé selon l'une des revendications précédentes, **caractérisé en ce que** dans l'étape (1), le pH est ajusté dans la rangée de 9 à 13.

9. Procédé selon l'une des revendications précédentes, **caractérisé en ce que** dans l'étape (1) une base choisie dans le groupe consistant en NaOH, KOH, Na₂CO₃, K₂CO₃, CaO, Ca(OH)₂ et MgO et mélanges de celles-ci, est utilisée en tant de l'au moins une base inorganique.

10. Procédé selon l'une des revendications précédentes, **caractérisé en ce qu'on** utilise, dans l'étape (1), une solution ou dispersion aqueuse d'une base inorganique contenant une proportion de base inorganique dans la rangée de 30 à 80 % en poids par rapport au poids total de la solution ou dispersion aqueuse contenant l'au moins une base inorganique.

11. Procédé selon la revendication 10, **caractérisé en ce que** la solution ou dispersion aqueuse de la base inorganique dans l'étape (1) est utilisé en une quantité dans la rangée de 1 bis 10 mL pour chaque L de l'au moins un substrat accessible à la fermentation.

12. Procédé selon l'une des revendications précédentes, **caractérisé en ce que** la séparation dans l'étape (3) est effectuée sous forme d'une séparation mécanique.

13. Procédé selon l'une des revendications précédentes, **caractérisé en ce que** la séparation dans l'étape (3) est effectuée au moyen d'une filtration à tamis, une centrifugation ou une combinaison d'une filtration à tamis et une centrifugation.

14. Procédé selon l'une des revendications précédentes, **caractérisé en ce que** la purification dans l'étape (4) est effectuée par lavage, décantation, centrifugation et/ou filtration à tamis sous addition de l'eau.

15. Procédé selon l'une des revendications précédentes, **caractérisé en ce qu'**on utilise de la boue brute provenant d'eaux usées en tant de l'au moins un substrat au moins partiellement accessible à la fermentation.
